# EUROPEAN PATENT SPECIFICATION

(11) **EP 1 984 429 B1**
(45) Date of publication and mention of the grant of the patent: **28.06.2017**
(21) Application number: 07762876.6
(22) Date of filing: 30.01.2007
(51) Int. Cl.: C08J 3/12, C08J 3/16, C08J 3/20, C08J 3/205, C08J 3/215, C08L 1/26, C08L 1/28, C08L 5/14

(54) **PROCESS OF MAKING COLD-WATER DISPERSIBLE CELLULOSE ETHERS**
VERFAHREN ZUR HERSTELLUNG VON IN KALTWASSER DISPERGIERBAREN CELLULOSEETHERN
PROCÉDÉ DE PRODUCTION D'ÉTHERS DE CELLULOSE DISPERSIBLES DANS L'EAU FROIDE

(30) Priority: 30.01.2006 US 763212 P
(43) Date of publication of application: 29.10.2008
(73) Proprietor: Hercules Incorporated, Wilmington, DE 19808 (US)
(72) Inventor: BONNEY, Stephen, R., Hockessin, DE 19707 (US); RMAILE, Hassan, H., Hockessin, DE 19707 (US)
(74) Representative: Bülle, Jan
(86) International application number: PCT/US2007/002631
(87) International publication number: WO 2007/089834

(56) References cited:
- EP-A- 0 555 980
- WO-A-99/40153
- US-A- 5 362 517
- DATABASE WPI Week 197345 Thomson Scientific, London, GB; AN 1973-68874U XP002478723 & JP 48 036167 B (KASAHARA E) 1 November 1973 (1973-11-01)
- DATABASE WPI Week 198245, Derwent Publications Ltd., London, GB; AN 1982-95856E & JP S57 158 244 A (KAO SOAP CO LTD) 30 September 1982

## Description

### RELATED APPLICATIONS

This application claims the benefit of U.S. Provisional Application Serial No. 60/763,212 filed on January 30, 2006, which is incorporated by reference in its entirety.

### FIELD OF INVENTION

The present invention is related to a process for making a polysaccharide composition and more particularly, to a process for making a cellulose ether composition which when applied in water is capable of exceptional dispersion, minimum lump formation and very quick hydration to reach maximum desired viscosity. The invention additionally concerns the polysaccharide compositions made from the process as well as use of these polysaccharide compositions in personal care, household care, building and construction materials, paint, oilfield, pharmaceutical, food including dairy and non-diary products, and antifouling products.

### BACKGROUND OF THE INVENTION

Water-soluble polymers are heavily used in a variety of consumer products. Despite their environmentally friendly and biodegradable advantages, water-soluble polymers suffer from the tendency to form lumps when in contact with water and take much longer to dissolve as a result of this tendency.

Dissolution, by definition, is a loosely used term. In this case, dissolution is used to represent the two stages of polymers going into solution. The first stage, dispersion, could be as short as few seconds and as long as several hours depending on technique, instrumentation, morphology and surface chemistry of the polymer. Dispersion is followed by hydration. In this stage, polymer chains loosen up and expand their hydrodynamic volume occupying the whole solution and building up viscosity on the way. As soon as polymer molecules contact water, they tend to swell very quickly and get in contact with neighboring particles. These particles glue together and form lumps of various sizes that tend to delay their hydration time significantly. Good dispersion is a prerequisite for minimal lump formation and ultimately quick hydration in final applications. In most systems involving water- soluble polymers, lump formation is considered to be the rate determining step for total dissolution time.

Database WPI Week 197345, Thomson Scientific, London, GB; AN 1973-68874U, XP002478723 discloses compositions comprising (1) carboxymethyl cellulose, alginic acid, polyacryiic acid or a salt thereof treated by (a) coating with glyceride or alcohol or (b) coating with starch paste, shellac, gelatin and agar, followed by the above treatment (a), or (c) coating wiht a mixture of substance in (a) and substance in (b), (2) alkali carbonate, bicarbonate, phosphate, polyphosphate or alkali salt of EDTA, opt. treated by the methods (a), (b) and (c); and opt. (3) of glucose, sugar, fructose, maltose, mannitol and common salt. When water is added to the composition the composition is rapidly wetted and dispersed and solution of alginic adid, polyacrylic acid or carboxymethyl cellulose can be obtained in a few minutes.

JP 48 036167, 1.11.1973 relates to compositions obtained by mixing a water-soluble inorganic salt, an aldehyde and water with a water-soluble cellulose derivate, granulating the mixture and drying it.

EP 0 555 980 discloses true spherical fine particles of a water-soluble polymer or a crosslinked product thereof, and a method for their production. The method comprises spray drying an aqueous solution of a mixture of a water-soluble polymer and an additive such as a polyhydric alcohol or an oligosaccharide. The removal of the additive may be effected by crosslinking or washing the particles.

US 5,362,517 relates to a particulate water-soluble or water-swellable polymeric material that is provided with a substantially uninterrupted continuous coating of crystalline material. Single particles or aggregates having a size below 1 mm in size can be made by mixing the polymeric particles with a substantially saturated or supersaturated aqueous solution of crystallizable material and thereby depositing it as a continuous crystalline coating on the particles.

WO 99/40153 discloses an acid-stable and cationic-compatible reticulated bacterial cellulose composition, containing co-agents and/or cationic surfactants, that are useful rheological modifying agents and stabilizing agents for suspensions, emulsions and foams, and their methods of preparation.

### SUMMARY OF THE INVENTION

The present invention relates to a process of making cold water dispersible polymers in general and cellulose ethers in particular in combination with a variety of different additives and low molecular weight hydrophilic molecules. Such additives provide the minimum time needed for good dispersibility. In principle, the origin of lump formation stems from the fact that polymer particles tend to associate with each other faster than they start dissolving in water. Controlling the particle size distribution is one approach to improve a polymer's dispersibility. However, controlling a water soluble polymer's particle size distribution is partially effective. When water soluble polymers are to be dispersed in an aqueous system, a surface coating is needed to provide a necessary screen to get good dispersion of the polymer particles. The surface coating functions to temporarily mask the water soluble polymer particles. This surface coating prevents the water soluble particles from coming in contact with one another and therefore forces the water soluble particles to dissolve into the aqueous system instead. Once the surface coating is dissolved in water, the water soluble polymer particles are already dispersed in water and thus have already started their hydration bypassing a potential delay due to Jumping in the dispersion stage.

This invention further is directed to a process for preparing cellulose ether compositions mentioned above by spraying aqueous solutions of salts, sugars, surfactants or low molecular weight water-soluble polymers into a fluidized sample of the desired water soluble polymer in a pneumatic drying means such as a fluid bed dryer or a deagglomerating flash dryer. The water soluble polymer particles are coated and dried simultaneously in a very efficient manner. The treated product gives very desirable properties in terms of particle size distribution, dispersibility and powder flowability.

This invention further is directed to a process for producing cold water dispersible water-soluble polymers having the steps of: (a) introducing a particulate, water-soluble polymer and an aqueous solution comprising a surface treatment additive into a high shear mixing chamber prior to being introduced into a pneumatic drying means such as a fluid bed dryer or a deagglomerating flash dryer wherein the water-soluble polymer comprises a cellulose ether, and the surface treatment additive comprises a salt; and maintaining the particulate, water-soluble polymer suspended a chamber within the pneumatic drying means by a gas carrier; and (b) maintaining the gas carrier at a temperature below the temperature at which the water soluble polymer particles degrade or become "sticky" or agglomerate to leave residual, dried surface treatment additive coated on the particulate, water-soluble polymer in an amount sufficient to produce the cold water dispersible water-soluble polymer wherein the amount of dried surface treatment additive coated on the particulates is less than 30 % by weight of the cold water dispersible water-soluble polymer.

This invention is further directed to the use of cold water dispersible water- soluble polymers in such end use compositions including personal care, household care, construction, paint, oilfield, pharmaceutical food including dairy and non-diary products, and antifouling products.

### BRIEF DESCRIPTION OF FIGURES

Figure 1 is a graph illustrating the viscosity of an example of a composition as well as two controls over time.
Figure 2 is a graph illustrating the viscosity of an example of a composition as well as two controls over time measured at two different impeller speeds.

### DETAILED DESCRIPTION OF THE INVENTON

It has been found that the use of certain additives and control of particle size distribution provide substantial improvement in water-soluble polymers dispersibility and hydration time.

The water-soluble polymer of the present invention comprise cellulose ethers. The cellulose ether of use in the present invention may be selected from the group consisting of hydroxyethyl cellulose (HEC), hydroxypropyl cellulose (HPC), water soluble ethylhydroxyethyl cellulose (EHEC), carboxymethyl cellulose (CMC), carboxymethylhydroxyethyl cellulose (CMHEC) hydroxypropylhydroxyethyl cellulose (HPHEC)1 methyl cellulose (MC), methylhydroxypropyl cellulose (MHPC), methylhydroxyethyl cellulose (MHEC), carboxymethylmethyl cellulose (CMMC), hydrophobically modified carboxymethyl cellulose (HMCMC), hydrophobically modified hydroxyethyl cellulose (HMHEC), hydrophobically modified hydroxypropyl cellulose (HMHPC), hydrophobically modified ethylhydroxyethyl cellulose (HMEHEC), hydrophobically modified carboxymethylhydroxyethyl cellulose (HMCMHEC), hydrophobically modified hydroxypropylhydroxyethyl cellulose (HMHPHEC)1 hydrophobically modified methyl cellulose (HMMC), hydrophobically modified methylhydroxypropyl cellulose (HMMHPC), hydrophobically modified methylhydroxyethyl cellulose (HMMHEC), hydrophobically modified carboxymethylmethyl cellulose (HMCMMC), cationic hydroxyethyl cellulose (cationic HEC) and cationic hydrophobically modified hydroxyethyl cellulose (cationic HMHEC). In the present invention, HEC, MC and CMC are preferred cellulose ethers.

In accordance with the present invention, the surface treatment additive must provide good dispersibility to the treated water-soluble polymers. Examples of substances that may suitably be included, but not limited to, in the treated water- soluble polymers according to the present invention are as follows:
2) Sugars such as lactose, fructose, glucose, sucrose, maltodextrin, etc.
3) Surfactants such as sorbitols and lauryl sulfates
4) Ester Solutions; and
5) Low MW polymers such as polyethylene glycols and propylene glycols and low MW cellulose ether compounds.

The preferred sugars for use as surface treatment additive in the present invention include monosaccharides and disaccharides. The monosaccharides of use as treatment additive in the present invention may be selected from the group consisting of glucose, fructose, galactose, and ribose. The disaccharides for use as surface treatment additive in the present invention may be selected from the group consisting of glucose, fructose, galactose, ribose, xylose, sucrose, maltose, lactose, cellobiose, trehalose, and glycerin. In the present invention, sucrose and maltose, are preferred disaccharides. In the present invention, a sugar may also include oligosaccharides, for example, maltodextrin.

The salts for use as surface treatment additive in the present invention include, but are not limited to phosphates, nitrates, sulfates, etc., sodium chloride, potassium chloride, calcium chloride, sodium phosphate, potassium phosphate and salts of citric acid.

The above list of additives and surface active additives are only examples and are not a complete list of active additives that can be used. Other additives that are used in these types of products are well known in the industry. In addition to the above additives conventionally used, the composition according to the present invention can optionally also include, but is not limited to, additives such as a colorant, preservative, antioxidant, nutritional supplements, alpha or beta hydroxy acid, emulsifiers, functional polymers, viscosifyi[pi]g agents (such as water-soluble polymers, i.e., hydroxyethylcellulose, hydroxypropylmethylcellulose, and fatty alcohols, i.e., cetyl alcohol), alcohols having 1-6 carbons, fats or fatty compounds, antimicrobial compound, zinc pyrithione, silicone material, hydrocarbon polymer, emollients, oils, surfactants, medicaments, flavors, fragrances, suspending agents, and mixtures thereof.

"Cold" water, for the purposes of this invention, means water at a temperature below the cloud point of the cellulose ether employed in the composition, preferably at a temperature below about 30<0>C. "Cloud point," as that term is employed herein, means that temperature at which an aqueous solution containing 2 wt% of the cellulose ether transmits 50% of the light transmitted by such solution at 20<0>C.

In accordance with the present invention, examples of functional polymers that can be used in blends with the surface treated polymers of the invention include hydrophobically modified polysaccharides or derivatives thereof, water -soluble polymers such as acrylic acid homopolymers such as Carbopol® product and anionic and amphoteric acrylic acid copolymers, vinylpyrrolidone homopolymers and cationic vinylpyrrolidone copolymers; nonionic, cationic, anionic, and amphoteric cellulosic polymers such as hydroxyethylcellulose, hydroxypropylcellulose, carboxymethylcellulose, hydroxypropylmethylcellulose, cationic hydroxyethylcellulose, cationic carboxymethylhydroxyethylcellulose, and cationic hydroxypropylcellulose; acrylamide homopolymers and cationic, amphoteric, and hydrophobic acrylamide copolymers, polyethylene glycol polymers and copolymers, hydrophobic polyethers, hydrophobic polyetheracetals, hydrophobically-modihed polyetherurethanes and other polymers referred to as associative polymers, hydrophobic cellulosic polymers, polyethyleneoxide-propylene oxide copolymers, and nonionic, anionic, hydrophobic, amphoteric, and cationic polysaccharides such as xanthan, chitosan, carboxymethyl guar, alginates, gum arabic, hydroxypropyl guar, carboxymethyl guar hydroxypropyltrimethylammonium chloride, guar hydroxypropyltrimethylammonium chloride, and hydroxypropyl guar hydroxypropyltrimethylammonium chloride.

The process of the present invention is carried out in a pneumatic drying means such as a fluid bed dryer, a deagglomerating flash dryer or other such fluidizing device. Typically, such devices comprise a dryer consisting of a chamber which is generally circular in design that has a grid at its bottom and opens at its top to be put up against an expansion chamber of a larger diameter than the chamber. The velocity of a gas carrier, typically air or nitrogen, passed up through the chamber is increased until the particulate, water-soluble polymer resting on the grid are suspended in the gas flow as a fluid, hence the terms "fluidization" and "fluid bed dryer". The particles are lifted by the upward force of the gas carrier stream out of the chamber into the expansion chamber where the gas expands and the upward force per unit of area is reduced. This allows the particles to fall back into the chamber and start this cycle over.

The gas carrier that is introduced into the chamber is heated to effectuate drying of the water-soluble polymer particles. The temperature of the gas carrier is to be maintained below the temperature at which the water soluble polymer particles will degrade or become "sticky" and agglomerate. The temperature of the gas carrier is typically below about 120°C, more preferably in the range of about 25°C to about 110°C, still more preferably in the range of about 30°C to about 75°C.

Stickiness (Cohesion and Adhesion) is a phenomenon frequently encountered during drying of powders and can be a major problem in the operation of dryers and can be detrimental to product quality of the powder. Uncontrolled agglomeration of the particles in the pneumatic drying means may adversely influence the drying, the bulk density and the dispensability of the particles. It is advantageous to select operating conditions of the pneumatic drying means that will substantially limit product stickiness and thermal degradation. Cellulose ethers pass through a highly cohesive plastic phase that is dependent on both their moisture and temperature. The higher the amount of moisture associated the particle, the lower the temperature of the pneumatic drying means must be maintained in order to avoid the particles from entering into the "sticky phase". The process of the present invention maintains the conditions of pneumatic drying means in order to keep the particles in a free flowing phase thus never allowing the particles to transition to the "sticky phase".

For example, when drying a HEC particle sample having a percentage bulk moisture of 15.5% by weight such particles would have a "sticky phase" of approximately 88°C, while a sample having a bulk moisture of 12.3% by weight would have a "sticky phase" of 91°C and a sample having a percentage bulk moisture of 8.0% would have a "sticky phase" of 116°C. As the amount of bulk moisture increases in a particle sample, the temperature of the sticky point for that particle sample drops.

The process of the present invention may be carried out as a batch process. Alternatively, the process of the present invention may be carried out as a continuous or semi-continuous process.

The pneumatic drying means is operated under such conditions as to minimize agglomeration of the water-soluble polymer in the present process and maintain the water-soluble polymer particles in a free flowing state. Among the conditions that contribute to minimizing the agglomeration of the water-soluble polymer in the present process is the use of a non-agglomerating amount of the aqueous solution to prevent liquid bridging between particles. The aqueous solution is carefully applied to the polymer in a high shear mixing chamber prior to being introduced into the chamber of the pneumatic drying means as the water-soluble polymer is being fluidized so that the particles of water-soluble polymer remain as discrete particles rather than become agglomerated into larger particles.

It is also preferable that the aqueous solution that is introduced into the high shear mixing chamber is a low water system. By minimizing the amount of water in the aqueous solution, it is possible to minimize agglomeration of the water- soluble polymer and permits the maintenance of this polymer as discrete particles. In this low water system, it is preferred that the aqueous solution that is introduced into the high shear mixing chamber of the fluid bed dryer is less than about 75% by weight water, more preferably less than about 50% by weight water, and still more preferably less than about 25% by weight water.

Among the advantages of using a low water system in the present process is that by minimizing the amount of water introduced initially into the high shear mixing chamber and subsequently into the pneumatic drying means as the water- soluble polymer is being fluidized the amount of heat that is necessary to drive the added water from the water-soluble polymer particles is reduced, thereby reducing the negative effects of heat exposure on the water soluble polymer particles being coated.

Another advantage of using the low water system in the present process is that it permits the production of cold water dispersible water-soluble polymers with lower amounts of dried surface treatment additive coated on the particulates thereby increasing the relative amount of water-soluble polymer in the cold water dispersible water-soluble polymer on a weight basis. The amount of dried surface treatment additive coated on the particulates using the process of the present invention may comprise preferably less than about 20% by weight of the cold water dispersible water-soluble polymer, still preferably less than about 10% by weight of the cold water dispersible water-soluble polymer, still more preferably less than about 5% by weight of the cold water dispersible water-soluble polymer.

The invention is further demonstrated by the following examples. The examples are presented to illustrate the invention, parts and percentages being by weight unless otherwise indicated.

### Examples

### Example 1.

Several commercial water-soluble polymers were treated in a fluid bed dryer supplied by Glatt (Germany). Solid samples of polymer powder (1 batch ∼125g) were placed in the MiniGlatt fluid bed dryer. Aqueous solutions containing various surface treatment additives were prepared separately and sprayed through a nozzle into the fluidized sample of the polymer using nitrogen as gas carrier. Temperature was varied in the range (30°C-75°C) and treatment time was anywhere between 20-60 minutes. Volume of solution added was 10% to 60% by weight compared to the weight of the initial water-soluble polymers sample.

**Table 1**

| **Water-Soluble Polymer** | **Polymer (grams)** | **Water (grams)** | **Surface Treatment Additive** | **Surface Treatment Additive (grams)** | **Water + Surface Treatment Additive (grams)** | **% Water added** |
|---|---|---|---|---|---|---|
| MC | 125 | 21.25 | NaCl | 3.75 | 25 | 17.00 |
| HPC | 150 | 82.4 | Lactose | 9.2 | 91.6 | 54.96 |
| HPC | 150 | 71.4 | Na-caseinate | 7.9 | 79.3 | 47.57 |
| HPC | 150 | 28.7 | NaCl | 1.5 | 30.2 | 19.113 |
| HPC | 150 | 57.6 | NaCl | 14.4 | 72.0 | 38.40 |
| HPC | 150 | 28.5 | Sugar | 1.5 | 30.0 | 19.00 |
| HPC | 150 | 60.0 | Sugar | 15.0 | 75.0 | 40.00 |
| Guar | 150 | 28.5 | KCl | 1.5 | 30 | 19.00 |
| HEC | 150 | 57 | NaCl | 3 | 60 | 38.00 |

In **Table 1**, a summary of experimental details for various treated water-soluble polymers, % water used and % additive are listed. Treated polymer samples with corresponding additive and water percentages used in the process.

### Example 2

Hydroxy Propyl Cellulose-HPC samples (Klucel® GF hydroxyl propyl cellulose, obtained from Hercules Incorporated) and their corresponding hydration times, additive type and percent are listed below in Table 2. All samples were prepared by the fluid bed approach as described in Example 1.

**Table 2**

| | **Time to 90% max. viscosity (min)** | **Relative to Contol** |
|---|---|---|
| **Control** | **24.5** | **N/A** |
| **HPC** | | |
| **Control** | **19.3** | **1.3X** |
| **HPC sieved (w/o fines)** | | |
| **Control** | **18.7** | **1.3X** |
| **HPC water gran** | | |
| **Example 2a** | **11.6** | **2.1X** |
| **HPC with 3% lactose** | | |
| **Example 2b** | **11.6** | **2.1X** |
| **HPC with 1% NaCl** | | |
| **Example 2c** | **9.8** | **2.5X** |
| **HPC with 8.8% NaCl** | | |

In Example 2, samples of hydroxyl propyl cellulose were tested. In initial stage, (Klucel® EF hydroxyl propyl cellulose, available from Hercules Incorporated) (M_{w} ∼80.000)) was sieved through a 200 mesh screen and coarse sample retained. In is noted that removal of the fines from the sample through the sieving process resulted in an improvement in hydration time compared to the original sample. It is observed that removal of fines through the use of a 200 mesh screen minimizes the lump formation problem as fine particles have a very high tendency to stick to bigger particles and glue them together. Coarser particles have lower tendency to stick together due to steric and surface area constraints. Using the same approach for another water-soluble polymer comprising hydroxyl propyl cellulose (Klucel® GF hydroxyl propyl cellulose available from Hercules Incorporated (M_{w}=370,000)) did not yield a satisfactory improvement. While not wishing to be bound by theory, it is believed that molecular weight of a water-soluble polymer tends to overwhelm the particle size contributions to dispersibility. In this case, a surface treatment of hydroxyl propyl cellulose improved its hydration time 2.5 fold when compared to a commercial untreated control.

### Example 3

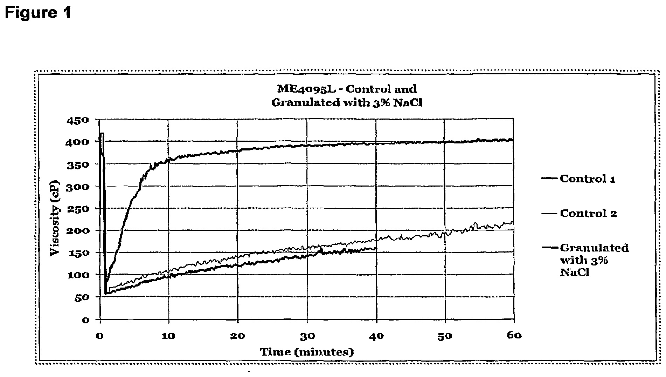

In Example 3, samples of cold water dispersable methyl hydroxyl ethyl cellulose MHEC (ME 4095L MHEC, available from Hercules Incorporated) were prepared by the fluid bed approach as described in Example 1 with NaCl as the surface treatment additive. Samples of the MHEC were tested before and after treatment with 3% NaCl using the fluid bed dryer. The dissolution curves were obtained using a Haake 550 Viscotester from Thermo Electron Corporation. These dissolution curves comprising hydration time and viscosity buildup are found in Figure 1.

In Example 3, a dramatic improvement in methyl hydroxyl ethyl cellulose polymer hydration before and after treatment with 3% NaCl in fluid bed dryer was observed. Among the advantages of such an improvement is minimization of the energy expenditure and increase efficiency and throughput in the dispersion of the cold water dispersible water-soluble polymers into water.

### Example 4

In Example 4, samples of cold water dispersable hydroxyl ethyl cellulose (Natrosol® 250H HEC, available from Hercules Incorporated). were prepared by the fluid bed approach as described in Example 1 with 2% NaCl as the surface treatment additive. Similar improvement to the improvement observed in Example 3 was observed after treatment of HEC with 2% NaCl.

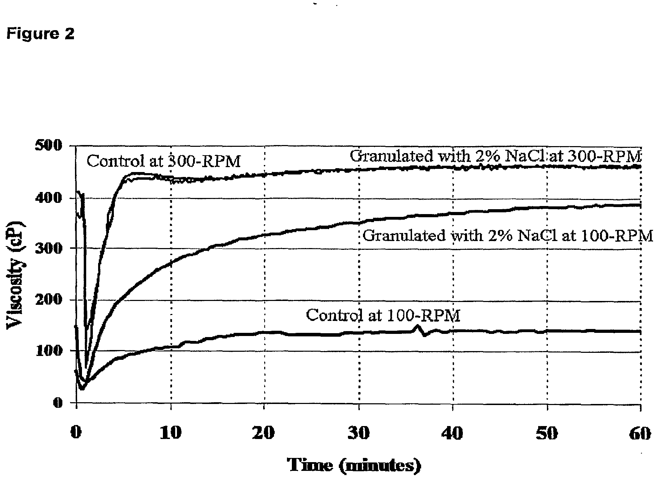

In Figure 2, the dissolution curves were produced at two different mixing speeds. At high mixing speeds (>300 rpm), the beneficial effect of the surface treatment on the HEC was not readily apparent with both the examples of the invention and the control samples exhibiting similar dissolution curves. However, when the speed of the mixer was lowered to 200 rpm, the example of the invention showed a significant difference in its hydration time and viscosity buildup after 60 minutes of continuous stirring at room temperature.

### Example 5

In Example 5, cold water dispersible methylcellulose particles are produced containing a 25% maltodextrin as a dried surface treatment additive. Cold water dispersible methylcellulose particles are produced using a high shear Schugi mixer combined with a continuous fluid bed dryer. The surface treatment additive solution will be at 40 wt% maltodextrin in water. The resulting product will be useful in a laxative preparation.

While the invention has been described, disclosed, illustrated and shown in various terms of certain embodiments or modifications which it has presumed in practice, the scope of the invention is not intended to be, nor should it be deemed to be, limited thereby and such other modifications or embodiments as may be suggested by the teachings herein are particularly reserved especially as they fall within the breadth and scope of the claims here appended.

## Claims

1. A process for producing cold water dispersible water-soluble polymers comprising the steps of:
(a) introducing a particulate, water-soluble polymer and an aqueous solution comprising a surface treatment additive into a high shear mixing chamber prior to being introduced into a pneumatic drying means and maintaining the particulate, water-soluble polymer suspended in a gas carrier within a chamber of the pneumatic drying means,
wherein
the water-soluble polymer comprises a cellulose ether, and
the surface treatment additive comprises a salt;
(b) maintaining the gas carrier at a temperature below the temperature at which the water soluble polymer particles degrade or become "sticky" and agglomerate to leave residual, dried surface treatment additive coated on the particulate, water-soluble polymer,
wherein the amount of dried surface treatment additive coated on the particulates is less than 30 % by weight of the cold water dispersible water-soluble polymer.

2. The process for producing cold water dispersible water-soluble polymers of claim 1,
wherein the cellulose ether is selected from the group consisting of hydroxyethyl cellulose (HEC), hydroxypropyl cellulose (HPC), water soluble ethylhydroxyethyl cellulose (EHEC), carboxymethyl cellulose (CMC), carboxymethylhydroxyethyl cellulose (CMHEC), hydroxypropylhydroxyethyl cellulose (HPHEC), methyl cellulose (MC), methylhydroxypropyl cellulose (MHPC), methylhydroxyethyl cellulose (MHEC), carboxymethylmethyl cellulose (CMMC), hydrophobically modified carboxymethyl cellulose (HMCMC), hydrophobically modified hydroxyethyl cellulose (HMHEC), hydrophobically modified hydroxypropyl cellulose (HMHPC), hydrophobically modified ethylhydroxyethyl cellulose (HMEHEC), hydrophobically modified carboxymethylhydroxyethyl cellulose (HMCMHEC), hydrophobically modified hydroxypropylhydroxyethyl cellulose (HMHPHEC), hydrophobically modified methyl cellulose (HMMC), hydrophobically modified methylhydroxypropyl cellulose (HMMHPC), hydrophobically modified methylhydroxyethyl cellulose (HMMHEC), hydrophobically modified carboxymethylmethyl cellulose (HMCMMC), cationic hydroxyethyl cellulose (cationic HEC) and cationic hydrophobically modified hydroxyethyl cellulose (cationic HMHEC).

3. The process for producing cold water dispersible water-soluble polymers of claim 1,
wherein the cellulose ether comprises hydroxyethyl cellulose (HEC), carboxymethyl cellulose (CMC) or methyl cellulose (MC).

4. The process for producing cold water dispersible water-soluble polymers of claim 1,
wherein the surface treatment additive comprises a salt selected from the group consisting of sodium chloride, potassium chloride, calcium chloride, sodium phosphate, potassium phosphate and salts of citric acid.

5. The process for producing cold water dispersible water-soluble polymers of claim 1,
wherein the salt comprises sodium chloride or potassium chloride.

6. The process for producing cold water dispersible water-soluble polymers of claim 1,
wherein the gas carrier is maintained at a temperature below 120 °C.

7. The process for producing cold water dispersible water-soluble polymers of claim 6,
wherein the gas carrier is maintained at a temperature in the range of 30 °C to 75°C.

8. The process for producing cold water dispersible water-soluble polymers of claim 1,
wherein process is carried out as a batch process or as a continuous or semi-continuous process.

9. The process for producing cold water dispersible water-soluble polymers of claim 1,
wherein the pneumatic drying means comprises a fluid bed dryer or a deagglomerating flash dryer.

## Patentansprüche

1. Verfahren zur Herstellung von in Kaltwasser dispergierbaren wasserlöslichen Polymeren, umfassend die Schritte:
(a) Einbringen eines teilchenförmigen wasserlöslichen Polymers und einer wässrigen Lösung, die ein Oberflächenbehandlungsadditiv umfasst, in eine Mischkammer mit hoher Scherung vor dem Einbringen in ein pneumatisches Trocknungsmittel, und Halten des teilchenförmigen wasserlöslichen Polymers suspendiert in einem Gasträger in einer Kammer des pneumatischen Trocknungsmittels,
wobei
das wasserlösliche Polymer einen Celluloseether umfasst, und
das Oberflächenbehandlungsadditiv ein Salz umfasst;
(b) Halten des Gasträgers auf einer Temperatur unterhalb der Temperatur, bei der die wasserlöslichen Polymerteilchen abgebaut werden oder "klebrig" werden und agglomerieren, um restliches getrocknetes Oberflächenbehandlungsadditiv als Beschichtung auf dem teilchenförmigen wasserlöslichen Polymer zurückzulassen,
wobei die Menge getrocknetem Oberflächenbehandlungsadditiv als Beschichtung auf den Teilchenmaterialien weniger als 30 Gew.% des in Kaltwasser dispergierbaren wasserlöslichen Polymers beträgt.

2. Verfahren zur Herstellung von in Kaltwasser dispergierbaren Polymeren nach Anspruch 1, wobei der Celluloseether ausgewählt ist aus der Gruppe bestehend aus Hydroxyethylcellulose (HEC), Hydroxypropylcellulose (HPC), wasserlöslicher Ethylhydroxyethylcellulose (EHEC), Carboxymethylcellulose (CMC), Carboxymethylhydroxyethylcellulose (CMHEC), Hydroxypropylhydroxyethylcellulose (HPHEC), Methylcellulose (MC), Methylhydroxypropylcellulose (MHPC), Methylhydroxyethylcellulose (MHEC), Carboxymethylmethylcellulose (CMMC), hydrophob modifizierter Carboxymethylcellulose (HMCMC), hydrophob modifizierter Hydroxyethylcellulose (HMHEC), hydrophob modifizierter Hydroxypropylcellulose (HMHPC), hydrophob modifizierter Ethylhydroxyethylcellulose (HMEHEC), hydrophob modifizierter Carboxymethylhydroxyethylcellulose (HMCMHEC), hydrophob modifizierter Hydroxypropylhydroxyethylcellulose (HMHPHEC), hydrophob modifizierter Methylcellulose (HMMC), hydrophob modifizierter Methylhydroxypropylcellulose (HMMHPC), hydrophob modifizierter Methylhydroxyethylcellulose (HMMHEC), hydrophob modifizierter Carboxymethylmethylcellulose (HMCMMC), kationischer Hydroxyethylcellulose (kationischer HEC) und kationischer hydrophob modifizierter Hydroxyethylcellulose (kationischer HMHEC).

3. Verfahren zur Herstellung von in Kaltwasser dispergierbaren wasserlöslichen Polymeren nach Anspruch 1, wobei der Celluloseether Hydroxyethylcellulose (HEC), Carboxymethylcellulose (CMC) oder Methylcellulose (MC) umfasst.

4. Verfahren zur Herstellung von in Kaltwasser dispergierbaren wasserlöslichen Polymeren nach Anspruch 1, wobei das Oberflächenbehandlungsadditiv ein Salz ausgewählt aus der Gruppe bestehend aus Natriumchlorid, Kaliumchlorid, Calciumchlorid, Natriumphosphat, Kaliumphosphat und Salzen von Citronensäure umfasst.

5. Verfahren zur Herstellung von in Kaltwasser dispergierbaren wasserlöslichen Polymeren nach Anspruch 1, wobei das Salz Natriumchlorid oder Kaliumchlorid umfasst.

6. Verfahren zur Herstellung von in Kaltwasser dispergierbaren wasserlöslichen Polymeren nach Anspruch 1, wobei der Gasträger auf einer Temperatur unter 120 °C gehalten wird.

7. Verfahren zur Herstellung von in Kaltwasser dispergierbaren wasserlöslichen Polymeren nach Anspruch 6, wobei der Gasträger auf einer Temperatur im Bereich von 30 °C bis 75 °C gehalten wird.

8. Verfahren zur Herstellung von in Kaltwasser dispergierbaren wasserlöslichen Polymeren nach Anspruch 1, wobei das Verfahren als Chargenverfahren oder als kontinuierliches oder halbkontinuierliches Verfahren durchgeführt wird.

9. Verfahren zur Herstellung von in Kaltwasser dispergierbaren wasserlöslichen Polymeren nach Anspruch 1, wobei das pneumatische Trocknungsmittel einen Wirbelschichttrockner oder einen deagglomerierend wirkenden Flash-Trockner umfasst.

## Revendications

1. Procédé de production de polymères hydrosolubles dispersibles dans l'eau froide comprenant les étapes de :
introduction d'un polymère hydrosoluble particulaire et d'une solution aqueuse comprenant un additif de traitement de surface dans une chambre de mélange à cisaillement élevé avant d'être introduits dans un moyen de séchage pneumatique et maintien du polymère hydrosoluble particulaire en suspension dans un gaz vecteur dans une chambre du moyen de séchage pneumatique, dans lequel
le polymère hydrosoluble comprend un éther de cellulose, et l'additif de traitement de surface comprend un sel ;
(b) maintien du gaz vecteur à une température inférieure à la température à laquelle les particules de polymère hydrosoluble se dégradent ou deviennent « collantes » et s'agglomèrent de manière à laisser de l'additif de traitement de surface résiduel séché revêtu sur le polymère hydrosoluble particulaire,
dans lequel la quantité d'additif de traitement de surface séché revêtu sur les particules est inférieure à 30 % en poids du polymère hydrosoluble dispersible dans l'eau froide.

2. Procédé de production de polymères hydrosolubles dispersibles dans l'eau froide de la revendication 1, dans lequel l'éther de cellulose est choisi dans le groupe constitué des hydroxyéthylcellulose (HEC), hydroxypropylcellulose (HPC), éthylhydroxyéthylcellulose hydrosoluble (EHEC), carboxyméthylcellulose (CMC), carboxyméthylhydroxyéthylcellulose (CMHEC), hydroxypropylhydroxyéthylcellulose (HPHEC), méthylcellulose (MC), méthylhydroxypropylcellulose (MHPC), méthylhydroxyéthylcellulose (MHEC), carboxyméthylméthylcellulose (CMMC), carboxyméthylcellulose à modification hydrophobe (HMCMC), hydroxyéthylcellulose à modification hydrophobe (HMHEC), hydroxypropylcellulose à modification hydrophobe (HMHPC), éthylhydroxyéthylcellulose à modification hydrophobe (HMEHEC), carboxyméthylhydroxyéthylcellulose à modification hydrophobe (HMCMHEC), hydroxypropylhydroxyéthylcellulose à modification hydrophobe (HMHPHEC), méthylcellulose à modification hydrophobe (HMMC), méthylhydroxypropylcellulose à modification hydrophobe (HMMHPC), méthylhydroxyéthylcellulose à modification hydrophobe (HMMHEC), carboxyméthylméthylcellulose à modification hydrophobe (HMCMMC), hydroxyéthylcellulose cationique (HEC cationique) et hydroxyéthylcellulose à modification hydrophobe cationique (HMHEC cationique).

3. Procédé de production de polymères hydrosolubles dispersibles dans l'eau froide de la revendication 1, dans lequel l'éther de cellulose comprend l'hydroxyéthylcellulose (HEC), la carboxyméthylcellulose (CMC) ou la méthylcellulose (MC).

4. Procédé de production de polymères hydrosolubles dispersibles dans l'eau froide de la revendication 1, dans lequel l'additif de traitement de surface comprend un sel choisi dans le groupe constitué des chlorure de sodium, chlorure de potassium, chlorure de calcium, phosphate de sodium, phosphate de potassium et des sels d'acide citrique.

5. Procédé de production de polymères hydrosolubles dispersibles dans l'eau froide de la revendication 1, dans lequel le sel comprend le chlorure de sodium ou le chlorure de potassium.

6. Procédé de production de polymères hydrosolubles dispersibles dans l'eau froide de la revendication 1, dans lequel le gaz vecteur est maintenu à une température inférieure à 120 °C.

7. Procédé de production de polymères hydrosolubles dispersibles dans l'eau froide de la revendication 6, dans lequel le gaz vecteur est maintenu à une température dans la plage de 30 °C à 75 °C.

8. Procédé de production de polymères hydrosolubles dispersibles dans l'eau froide de la revendication 1, le procédé étant conduit sous la forme d'un procédé discontinu ou sous la forme d'un procédé continu ou semi-continu.

9. Procédé de production de polymères hydrosolubles dispersibles dans l'eau froide de la revendication 1, dans lequel le moyen de séchage pneumatique comprend un séchoir à lit fluidisé ou un séchoir éclair à désagglomération.
